# EUROPEAN PATENT APPLICATION

(11) **EP 3 229 522 A1**
(43) Date of publication of application: **11.10.2017**
(21) Application number: 14908797.5
(22) Date of filing: 25.12.2014
(51) Int. Cl.: H04W 28/08

(54) **METHOD AND APPARATUS FOR DEPLOYING SERVICE STRATEGY**

(71) Applicant: Huawei Technologies Co., Ltd., Longgang District Shenzhen, Guangdong 518129 (CN)
(72) Inventor: WU, Wenfu, Shenzhen Guangdong 518129 (CN)
(74) Representative: Gill Jennings & Every LLP
(86) International application number: PCT/CN2014/095027
(87) International publication number: WO 2016/101229

(57) **Abstract**

The present invention discloses a service deployment method and apparatus. A controller determines a policy according to user equipment UE track information sent by a data analysis platform, and deploys a service policy, so as to ensure that a service function is deployed in a mobile network as needed, thereby avoiding network resource waste possibly caused by a static service configuration.

## Description

### TECHNICAL FIELD

Embodiments of the present invention relate to the communications field, and more specifically, to a service policy deployment method and apparatus.

### BACKGROUND

To improve user experience, operators deploy multiple value-added services in mobile networks. For example, in a cache service, content such as some web pages or videos with relatively high click-through rates is cached, so that a user can preferentially obtain content from a cache, thereby significantly increasing a user access speed. For another example, in a video optimization service, coding/decoding, frame frequency optimization, or other optimization is performed on a video, to effectively reduce traffic used to transmit the video in a wireless network.

Currently, operators deploy value-added services in networks mainly by using a static configuration method, for example, deploy a cache service function in all access network elements. However, a single access network element generally has a relatively small coverage range and user base. Therefore, usage of the cache service function deployed in many access network elements is probably not high, causing network resource waste. Therefore, how to deploy a service function in a mobile network as needed to avoid network resource waste possibly caused by a static service configuration is currently a problem to be resolved urgently.

### SUMMARY

Embodiments of the present invention provide a service policy deployment method and apparatus, to ensure that a service function is deployed in a mobile network as needed, thereby avoiding network resource waste possibly caused by a static service configuration.

According to a first aspect, a service policy deployment method is provided, including: receiving, by a controller, user equipment UE track information of a first area that is sent by a data analysis platform; determining, by the controller, a service policy of the first area according to the UE track information; and deploying, by the controller, the service policy for the first area according to the service policy.

With reference to the first aspect, in a first possible implementation manner, the method includes: sending, by the controller, a data analysis request to the data analysis platform to request to obtain the UE track information of the first area; and
receiving, by the controller, the UE track information sent by the data distribution platform, where the UE track information is obtained by the data distribution platform by analyzing information about UEs in the first area; or obtaining, by the controller, the UE track information that is sent by the data distribution platform and that is obtained according to information about UEs in the first area.

With reference to the first aspect or the first possible implementation manner of the first aspect, in a second possible implementation manner, the UE track information includes: UE user profile information.

With reference to the second possible implementation manner of the first aspect, in a third possible implementation manner, the UE track information further includes at least one piece of information of: UE movement information or UE quantity information.

With reference to the second or the third possible implementation manner of the first aspect, in a fourth possible implementation manner, the determining, by the controller, a service policy of the first area according to the UE track information includes: determining, by the controller, the service policy of the first area according to the UE user profile information.

With reference to the third possible implementation manner of the first aspect, in a fifth possible implementation manner, the determining, by the controller, a service policy of the first area according to the UE track information includes: determining, by the controller, the service policy of the first area according to the UE user profile information and the UE movement information; or determining, by the controller, the service policy of the first area according to the UE user profile information and the UE quantity information; or determining, by the controller, the service policy of the first area according to the UE user profile information, the UE quantity information, and the UE movement information of the area.

With reference to the first aspect or any one of the first to the fifth possible implementation manners of the first aspect, in a sixth possible implementation manner, the service policy includes at least one policy of service function deployment, a service deployment area, or a service deployment resource.

With reference to the fourth or the sixth possible implementation manner of the first aspect, in a seventh possible implementation manner, the determining, by the controller, the service policy of the first area according to the UE user profile information includes: determining, by the controller according to video traffic information in the UE user profile information, whether to deploy a video optimization function.

With reference to the seventh possible implementation manner of the first aspect, in an eighth possible implementation manner, the method includes: determining, by the controller according to the UE movement information, a location at which the video optimization function is deployed; or determining, by the controller according to the UE movement information and the UE quantity information, a location at which the video optimization function is deployed.

With reference to the sixth possible implementation manner of the first aspect, in a ninth possible implementation manner, the determining, by the controller, the service policy of the first area according to the UE user profile information includes: determining, by the controller according to a video click-through rate in the UE user profile information, whether to deploy a content cache function.

With reference to the ninth possible implementation manner of the first aspect, in a tenth possible implementation manner, the method includes: determining, by the controller according to the UE movement information, a location at which the content cache function is deployed; or determining, by the controller according to the UE quantity information, a location at which the content cache function is deployed; or determining, by the controller according to the UE movement information and the UE quantity information, a location at which the content cache function is deployed.

With reference to the ninth possible implementation manner of the first aspect, in an eleventh possible implementation manner, the method includes: determining, by the controller, a cache content type in the content cache function according to access content in the UE user profile information.

With reference to the eleventh possible implementation manner of the first aspect, in a twelfth possible implementation manner, the method includes: determining, by the controller according to the cache content type, a resource allocated to the content cache function.

With reference to any one of the sixth to the twelfth possible implementation manners of the first aspect, in a thirteenth possible implementation manner, the deploying, by the controller, the service policy for the first area according to the service policy includes: sending, by the controller, the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or according to the service policy, determining, by the controller, a service function to be deployed, applying for a service deployment resource, determining a service deployment network element, and allocating the resource that is applied for to the service function deployment network element.

According to a second aspect, a service policy deployment method is provided, including: obtaining, by a data analysis platform, information about UEs in a first area; analyzing, by the data analysis platform, the information about the UEs to obtain UE track information of the first area; and sending, by the data analysis platform, the UE track information to a controller, so that the controller determines a service policy of the first area according to the UE track information and deploys the service policy.

With reference to the second aspect, in a first possible implementation manner, the UE track information includes: UE user profile information.

With reference to the first possible implementation manner of the second aspect, in a second possible implementation manner, the UE track information further includes at least one piece of information of: UE movement information or UE traffic information.

With reference to the second aspect or the first or the second possible implementation manner of the second aspect, in a third possible implementation manner, the information about the UEs includes: location information of the UEs, signaling data of the UEs, or service flow information of the UEs.

With reference to the third possible implementation manner of the second aspect, in a fourth possible implementation manner, the obtaining, by a data analysis platform, information about UEs includes: obtaining, by the data analysis platform, the location information of the UEs that is sent by an access network element or an operation support system OSS; or obtaining, by the data analysis platform, the signaling data of the UEs that is sent by a control-plane network element; or obtaining, by the data analysis platform, the service flow information of the UEs that is sent by a user-plane network element.

With reference to the second aspect or any one of the first to the fourth possible implementation manners of the second aspect, in a fifth possible implementation manner, the analyzing, by the data analysis platform, the information about the UEs includes at least one of the following manners: analyzing, by the data analysis platform, obtained service flow information of single UE to obtain a user behavior preference of the single UE; and clustering, by the data analysis platform, user behavior preferences of all UEs in the first area, to obtain the user behavior preferences of the UEs in the first area through clustering and obtain the UE user profile information; or analyzing, by the data analysis platform, obtained signaling data of single UE to obtain movement information of the single UE; and clustering, by the data analysis platform, movement information of all UEs in the first area, to obtain the UE movement information of the first area through clustering; or obtaining, by the data analysis platform, a quantity of all UEs in the first area.

According to a third aspect, a service policy deployment apparatus is provided, including: a receiving module, configured to receive user equipment UE track information of a first area that is sent by a data analysis platform; and a processing module, configured to: determine a service policy of the first area according to the UE track information, and deploy the service policy for the first area according to the service policy.

With reference to the third aspect, in a first possible implementation manner, the apparatus further includes: a sending module, configured to send a data analysis request to the data analysis platform to request to obtain the UE track information; and the receiving module being configured to receive user equipment UE track information of a first area that is sent by the data analysis platform includes: the receiving module being configured to receive the UE track information sent by the data distribution platform, where the UE track information is obtained by the data distribution platform by analyzing information about UEs in the first area; or the receiving module being configured to receive user equipment UE track information of a first area that is sent by a data analysis platform includes: the receiving module being configured to receive the UE track information that is sent by the data distribution platform and that is obtained according to information about UEs in the first area.

With reference to the third aspect or the first possible implementation manner of the third aspect, in a second possible implementation manner, the UE track information includes: UE user profile information.

With reference to the second possible implementation manner of the third aspect, in a third possible implementation manner, the UE track information further includes at least one piece of information of: UE movement information or UE quantity information.

With reference to the second or the third possible implementation manner of the third aspect, in a fourth possible implementation manner, the processing module being configured to determine a service policy of the first area according to the UE track information includes: the processing module being configured to determine the service policy of the first area according to the UE user profile information.

With reference to the third possible implementation manner of the third aspect, in a fifth possible implementation manner, the processing module being configured to determine a service policy of the first area according to the UE track information includes: the processing module being configured to determine the service policy of the first area according to the UE user profile information and the UE movement information; or the processing module being configured to determine the service policy of the first area according to the UE user profile information and the UE quantity information; or the processing module being configured to determine the service policy of the first area according to the UE user profile information, the UE quantity information, and the UE movement information of the area.

With reference to the third aspect or any one of the first to the fifth possible implementation manners of the third aspect, in a sixth possible implementation manner, the service policy includes at least one policy of service function deployment, a service deployment area, or a service deployment resource.

With reference to the fourth or the sixth possible implementation manner of the third aspect, in a seventh possible implementation manner, the processing module being configured to determine the service policy of the first area according to the UE user profile information includes: the processing module being configured to determine, according to video traffic information in the UE user profile information, whether to deploy a video optimization function.

With reference to the seventh possible implementation manner of the third aspect, in an eighth possible implementation manner, the processing module is further configured to determine, according to the UE movement information, a location at which the video optimization function is deployed; or the processing module is further configured to determine, according to the UE movement information and the UE quantity information, a location at which the video optimization function is deployed.

With reference to the sixth possible implementation manner of the third aspect, in a ninth possible implementation manner, the processing module being configured to determine the service policy of the first area according to the UE user profile information includes: the processing module being configured to determine, according to a video click-through rate in the UE user profile information, whether to deploy a content cache function.

With reference to the ninth possible implementation manner of the third aspect, in a tenth possible implementation manner, the apparatus includes: the processing module, configured to determine, according to the UE movement information, a location at which the content cache function is deployed; or the processing module, configured to determine, according to the UE quantity information, a location at which the content cache function is deployed; or the processing module, configured to determine, according to the UE movement information and the UE quantity information, a location at which the content cache function is deployed.

With reference to the ninth possible implementation manner of the third aspect, in an eleventh possible implementation manner, the apparatus includes: the processing module, configured to determine a cache content type in the content cache function according to access content in the UE user profile information.

With reference to the eleventh possible implementation manner of the third aspect, in a twelfth possible implementation manner, the apparatus further includes: the processing module, configured to determine, according to the cache content type, a resource allocated to the content cache function. With reference to any one of the sixth to the twelfth possible implementation manners of the third aspect, in a thirteenth possible implementation manner, the processing module being configured to deploy the service policy for the first area according to the service policy includes: the processing module being configured to send the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or the processing module being configured to: according to the service policy, determine a service function to be deployed, apply for a service deployment resource, determine a service deployment network element, and allocate the resource that is applied for to the service function deployment network element.

According to a fourth aspect, a service policy deployment apparatus is provided, including: a receiving module, configured to obtain information about UEs in a first area; a processing module, configured to analyze the information about the UEs to obtain UE track information of the first area; and a sending module, configured to send the UE track information to a controller, so that the controller determines a service policy of the first area according to the UE track information and deploys the service policy.

With reference to the fourth aspect, in a first possible implementation manner, the UE track information includes: UE user profile information.

With reference to the first possible implementation manner of the fourth aspect, in a second possible implementation manner, the UE track information further includes at least one piece of information of: UE movement information or UE traffic information.

With reference to the fourth aspect or the first or the second possible implementation manner of the fourth aspect, in a third possible implementation manner, the information about the UEs includes: location information of the UEs, signaling data of the UEs, or service flow information of the UEs.

With reference to the third possible implementation manner of the fourth aspect, in a fourth possible implementation manner, the receiving module is configured to obtain the information about the UEs in the first area; and the receiving module is configured to obtain the location information of the UEs that is sent by an access network element or an operation support system OSS; or the receiving module is configured to obtain the signaling data of the UEs that is sent by a control-plane network element; or the receiving module is configured to obtain the service flow information of the UEs that is sent by a user-plane network element.

With reference to the fourth aspect or any one of the first to the fourth possible implementation manners of the fourth aspect, in a fifth possible implementation manner, the apparatus according to any one of claims 35 to 39, where the processing module being configured to analyze the information about the UEs includes at least one of the following processing manners: the processing module being configured to: analyze obtained service flow information of single UE to obtain a user behavior preference of the single UE, and cluster user behavior preferences of all UEs in the first area, to obtain the user behavior preferences of the UEs in the first area through clustering and obtain the UE user profile information; or the processing module being configured to: analyze obtained signaling data of single UE to obtain movement information of the single UE, and cluster movement information of all UEs in the first area, to obtain the UE movement information of the first area through clustering; or the processing module being configured to: obtain a quantity of all UEs in the first area.

Based on the foregoing technical solutions, according to the service deployment method and apparatus provided in the embodiments of the present invention, a controller determines a policy according to user equipment UE track information sent by a data analysis platform, and deploys a service policy, so as to ensure that a service function is deployed in a mobile network as needed, thereby avoiding network resource waste possibly caused by a static service configuration.

### BRIEF DESCRIPTION OF DRAWINGS

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture on which an embodiment of the present invention is based;
FIG. 2 is a schematic flowchart of a service policy deployment method according to an embodiment of the present invention;
FIG. 3 is a schematic flowchart of a service policy deployment method according to an embodiment of the present invention;
FIG. 4 is a signaling interaction diagram of a service policy deployment method according to an embodiment of the present invention;
FIG. 5 is a schematic block diagram of a service policy deployment apparatus according to an embodiment of the present invention;
FIG. 6 is a schematic block diagram of a service policy deployment apparatus according to an embodiment of the present invention;
FIG. 7 is a schematic block diagram of a service policy deployment apparatus according to an embodiment of the present invention; and
FIG. 8 is a schematic block diagram of a service policy deployment apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), a Worldwide Interoperability for Microwave Access (Worldwide Interoperability for Microwave Access, "WiMAX" for short) communications system or the like.

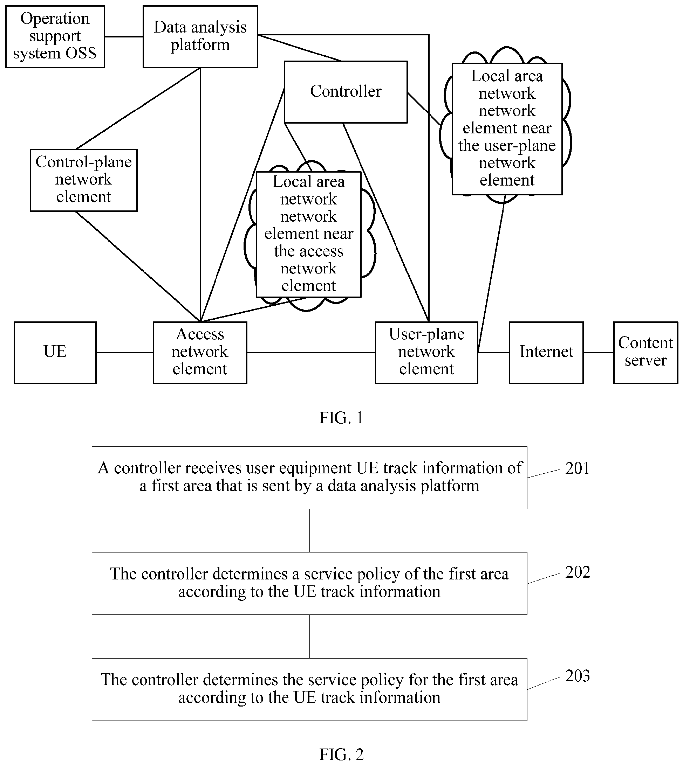

FIG. 1 is a schematic diagram of a network architecture on which an embodiment of the present invention is based. It should be understood that, the network architecture shown in FIG. 1 is a preferred application architecture in this embodiment of the present invention, but this embodiment of the present invention may be based on another network architecture. This is not limited in this embodiment of the present invention. The network architecture and definitions of terms in the present invention are applicable to other embodiments of the present invention, and details are described in the present invention.

As shown in FIG. 1, the network architecture on which this embodiment of the present invention is based includes, but is not limited to, a data analysis platform, a controller, an access network element, a control-plane network element, a user-plane network element, an operation support system (Operations Support System, "OSS" for short), a content server, a service node, and the like.

The data analysis platform is a logical network element, and may be an independent network element or may be integrated in the OSS or another network element. A function of the data analysis platform is mainly to perform data analysis. In the present invention, the data analysis platform is mainly used to obtain various data including information about UEs, for example, location information of the UEs, signaling data of the UEs (for example, mobility management signaling or session management signaling of the UEs), and service flow information of the UEs (information about services accessed by the UEs, for example, websites accessed by the UEs or services used by the UEs) from a network. The data analysis platform performs data mining processing based on the obtained information about the UEs, to obtain UE track information (which is mainly a behavior pattern or service preferences of UEs in an area, and may also be referred to as a user group traffic model, where the name is not limited in the present invention). Specifically, UE track information of an area includes one or more pieces of information of: UE user profile information of the area (user behavior preferences of UEs in an area, for example, user video access behavior characteristics of the UEs in the area), UE movement information of the area (information about stay duration and moving speeds of the UEs in the area), or UE quantity information of the area (a quantity of the UEs in the area). The foregoing area may be a region-level-based (an administrative region such as Pudong New Area of Shanghai) area, or a cell-level area, or a base-station-level area.

The controller is a logical network element, and is mainly configured to deploy a service policy. The controller may be an independent network element or may be integrated in the OSS or the control-plane network element or another network element. In the present invention, the controller is mainly configured to: obtain the UE track information from the data analysis platform, and deploy a service policy according to the UE track information. The service policy includes one or more policies of a service function to be deployed (for example, a cache service function to be deployed or a video optimization service function to be deployed), a service deployment area (for example, a cache service function is deployed in a base station, a video optimization service function is deployed in the user-plane network element, or an antivirus service is deployed on the service node), or a service deployment resource (for example, a resource is allocated to a cache service to be deployed or a video optimization service to be deployed).

The access network element is a network element that mainly processes a function on a wireless access side, and may be an evolved Node B (evolved Node B, "eNode B" for short), a radio network controller (Radio Network Controller, "RNC" for short), or the like.

The control-plane network element is a network element, for example, a serving GPRS support node (Serving GPRS Support Node, for short "SGSN") or a mobility management entity (Mobility Management Entity, "MME" for short), that mainly processes mobility management signaling.

The user-plane network element is a network element, for example, a gateway GPRS support node (Gateway GPRS Support Node, "GGSN" for short) or a packet data gateway (Packet Data Network Gateway, "PDN GW" for short), that mainly performs data forwarding processing.

The operation support system OSS is mainly used for monitoring, end-to-end design, and error handling in the communications field.

The content server includes content provided by a content provider (Content Provider, "CP" for short) or a service provider (Service Provider, "SP" for short).

The present invention is applicable to virtualization. The virtualization refers to a virtualization technology that virtualizes one computer into multiple virtual machines (VM, Virtual Machine). The multiple virtual machines can simultaneously run on one computer. Each virtual machine can run a different operating system and application programs of the multiple virtual machines can run in independent space without mutual impact, thereby significantly improving operating efficiency of the computer. A virtualized network (such as an NFV (Network Function Virtualization, Network Functions Virtualization) network) virtualizes, by using commodity hardware such as X86 and the virtualization technology, a commodity hardware resource into multiple virtual machines, where network functions are deployed in the virtualized virtual machines. A service policy deployment method of the present invention may be applied to the virtualized network. When a service function to be deployed is determined, one virtual machine is virtualized by using a virtualization technology and the determined service function is deployed on the virtual machine; or the determined service function is deployed on an existing virtual machine.

FIG. 2 is a schematic flowchart of a service policy deployment method according to an embodiment of the present invention. The method may be performed by any suitable apparatus, for example, a controller, but this is not limited in this embodiment of the present invention. As shown in FIG. 2, the method includes the following steps:
S201: The controller receives user equipment UE track information of a first area that is sent by a data analysis platform.

The first area may be a region-level-based (an administrative region such as Pudong New Area of Shanghai) area, or a cell-level area, or a base-station-level area. The UE track information of the first area may include area information and track information of UEs in the area. The area information may be information about one or more areas, and this is not limited in the present invention. Definitions in this embodiment are also applicable to another embodiment of the present invention.

Specifically, the controller may send a data analysis request to the data analysis platform to request to obtain the UE track information of the first area. The analysis request includes UE track information analysis request information. The controller may request UE track information of one or more areas. If the analysis request does not include information about a specific local area, the data analysis platform sends analyzed UE track information of all areas (for example, UE track information of all areas of Shanghai) to the controller. If the analysis request includes information about a specific area, the data analysis platform sends analyzed UE track information of this area to the controller. The data analysis platform analyzes information about the UEs to obtain the UE track information, and sends the UE track information to the controller.

Optionally, after obtaining the UE track information according to the information about the UEs in the first area, the data analysis platform proactively sends the UE track information to the controller.

The UE track information includes UE user profile information. The UE user profile information mainly includes user characteristics, behavior preferences, or the like of the UEs in the first area, for example, user types, accessed network content, or click-through rates of the UEs in the area, and this is not limited in the present invention.

Optionally, the UE track information may further include at least one piece of information of: UE movement information or UE quantity information of the first area. The UE movement information is mainly information about stay duration and moving speeds of the UEs in the first area, and the UE quantity information is a quantity of the UEs in the first area.

S202: The controller determines a service policy of the first area according to the UE track information.

Specifically, the controller determines the service policy of the first area according to the UE user profile information.

Optionally, the controller determines the service policy of the first area according to the UE user profile information and the UE movement information; or the controller determines the service policy of the first area according to the UE user profile information and the UE quantity information; or the controller determines the service policy of the first area according to the UE user profile information, the UE quantity information, and the UE movement information.

Specifically, the controller determines, according to video traffic information in the UE user profile information, whether to deploy a video optimization function. Optionally, the controller determines, according to the UE movement information, a location at which the video optimization function is deployed; or the controller determines, according to the UE movement information and the UE quantity information, a location at which the video optimization function is deployed. The controller determines, according to a video click-through rate in the UE user profile information, whether to deploy a content cache function.

Optionally, the controller determines, according to the UE movement information, a location at which the content cache function is deployed; or the controller determines, according to the UE quantity information, a location at which the content cache function is deployed; or the controller determines, according to the UE movement information and the UE quantity information, a location at which the content cache function is deployed.

Optionally, the controller determines a cache content type in the content cache function according to access content in the UE user profile information. The controller determines, according to the cache content type, a resource allocated to the content cache function.

Specifically, the service policy includes at least one of service function deployment, a service deployment area, or a service deployment resource. The service function deployment is to deploy a specific service function, for example, deploy a cache service function or a video optimization service function. The service deployment area is a specific area at which a service function is deployed. For example, a cache service function is deployed in a base station, a video optimization service function is deployed in a user-plane network element, or an antivirus service is deployed on a service node. The service deployment resource is to allocate a resource to a service function to be deployed, for example, allocate a resource to a cache service to be deployed or a video optimization service to be deployed.

S203: The controller deploys the service policy for the first area according to the service policy.

Specifically, the controller sends the service policy to an access network element, a user-plane network element, a local area network network element near the access network element, or a local area network network element near the user-plane network element. The access network element, the user-plane network element, the local area network network element near the access network element, or the local area network network element near the user-plane network element determines a service function to be deployed, the service deployment area, or the service deployment resource according to the service policy.

Alternatively, according to the service policy, the controller determines a service function to be deployed, applies for a resource needed for the service function that needs to be deployed, determines a service deployment network element, and allocates the resource that is applied for to the service function deployment network element.

Therefore, according to the service deployment method in this embodiment of the present invention, a controller determines a policy according to user equipment UE track information sent by a data analysis platform, and deploys a service policy, so as to ensure that a service function is deployed in a mobile network as needed, thereby avoiding network resource waste possibly caused by a static service configuration.

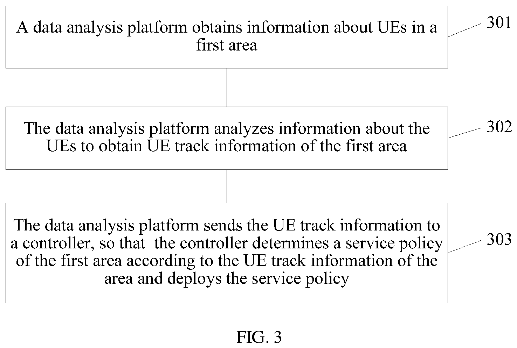

FIG. 3 is a schematic flowchart of a service policy deployment method according to an embodiment of the present invention. The method may be performed by any suitable apparatus, for example, a data analysis platform, but this is not limited in this embodiment of the present invention. Cross reference may be made between this embodiment of the present invention and the embodiment of the present invention shown in FIG. 2.

As shown in FIG. 3, the method includes the following steps:
S301: The data analysis platform obtains information about UEs in a first area.

Specifically, the information about the UEs includes: location information of the UEs, signaling data of the UEs, or service flow information of the UEs.

Further, the data analysis platform obtains the location information of the UEs that is sent by an access network element or an operation support system OSS; or the data analysis platform obtains the signaling data of the UEs that is sent by a control-plane network element; or the data analysis platform obtains the service flow information of the UEs that is sent by a user-plane network element.

S302: The data analysis platform analyzes the information about the UEs to obtain UE track information of the first area.

The UE track information includes: UE user profile information.

Optionally, the UE track information further includes at least one piece of information of: UE movement information or UE traffic information.

S303: The data analysis platform sends the UE track information to a controller, so that the controller determines a service policy of the first area according to the UE track information of the area and deploys the service policy.

Therefore, according to the service deployment method in this embodiment of the present invention, a data analysis platform analyzes information about UEs to obtain UE track information of an area, and sends the UE track information of the area, so that a controller determines a service policy according to the UE track information of the area, and deploys the service policy, so as to ensure that a service function is deployed in a mobile network as needed, thereby avoiding network resource waste possibly caused by a static service configuration.

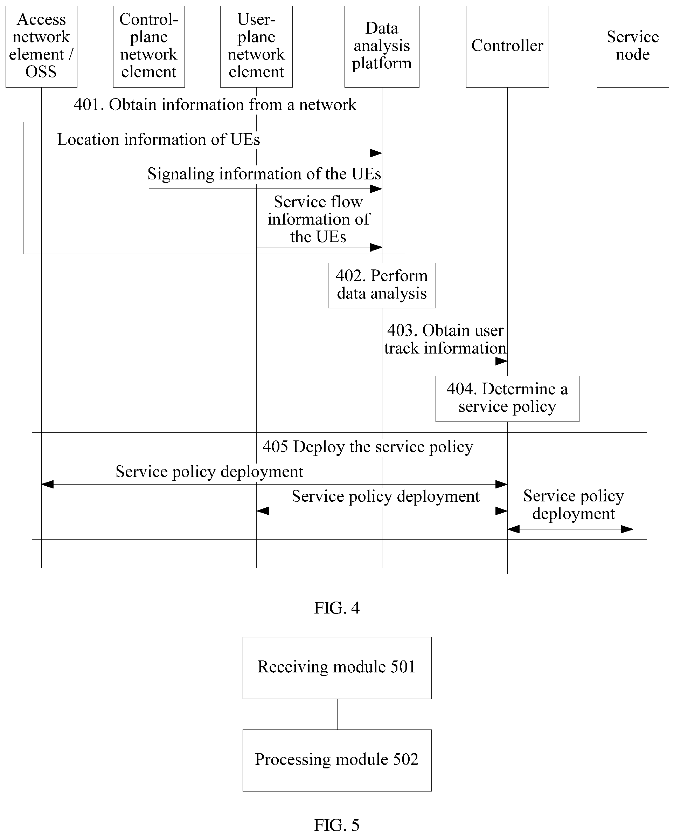

FIG. 4 is a signaling interaction diagram of a service policy deployment method according to an embodiment of the present invention. This embodiment of the present invention is a specific embodiment of the embodiments shown in FIG. 2 and FIG. 3, and cross reference may be made between this embodiment of the present invention and the embodiments shown in FIG. 2 and FIG. 3.

As shown in FIG. 4, this embodiment of the present invention includes the following steps:
S301: A data analysis platform obtains information about UEs from a network.

Specifically, the data analysis platform may obtain location information of the UEs from an access network element or an OSS, obtain signaling data of the UEs from a control-plane network element, or obtain service flow information of the UEs from a user-plane network element.

S402: The data analysis platform analyzes the information about the UEs to obtain UE track information.

The data analysis platform performs data mining processing on the obtained information about the UEs to obtain the UE track information.

Specifically, the UE track information includes UE user profile information of an area. Optionally, the UE track information may further include at least one piece of information of: UE movement information of the area, UE quantity information of the area. The following shows an example of the UE track information.

| Area | UE user profile information | UE movement information | Quantity of UEs |
|---|---|---|---|
| A | Most are office workers, and video access is infrequent. | A stay duration is short, and a moving speed is fast. | Large |
| B | Most are office workers, video traffic is high, but a click-through rate of a single video is low. | A stay duration is short, and a moving speed is fast. | Large |
| C | Most are visitors, and accessed video advertisements are short and small. | A stay duration is relatively short, and a moving speed is fast. | Large |
| D | Most are visitors, and accessed video advertisements are short and small. | A stay duration is relatively short, and a moving speed is fast. | Small |
| E | Most are residents, video traffic is high, and variety shows are favored, where a rebroadcast rate of the variety shows is high, but a rebroadcast rate of another-type program is low. | A stay duration is long, and a moving speed is slow. | Large |
| F | Most are residents, video traffic is high, but a click-through rate of a single video is low. | A stay duration is long, and a moving speed is slow. | Large |

For example, the video access being infrequent may indicate that a frequency of accessing videos by UEs in an area is relatively low, the video traffic being high may indicate that traffic used by UEs in an area to access videos is relatively high, and the rebroadcast rate being high may indicate that a frequency of accessing a same video by UEs in an area is relatively high. Details are not described thereto in the present invention.

In the UE track information, a video traffic threshold (for example, 1-TB traffic) is set, and when video traffic of the UE exceeds this threshold, it is considered that the video traffic is high; otherwise, when a video traffic of the UE is less than this threshold, it is considered that the video traffic is low. A stay duration threshold (for example, 5 minutes) is set, and when a stay duration of the UE exceeds this threshold, it is considered that the stay duration is long; otherwise, when a stay duration of the UE is less than this threshold, it is considered that the stay duration is short. A moving speed threshold (for example, 30 kilometers per hour) is set, and when a moving speed of the UE exceeds this threshold, it is considered that the moving speed is fast; otherwise, when a moving speed of the UE is less than this threshold, it is considered that the moving speed is slow. A UE quantity threshold (for example, 500 persons) of the area is set, and when a quantity of the UEs in the area exceeds this threshold, it is considered that there are a large quantity of UEs; otherwise, when a quantity of the UEs in the area is less than this threshold, it is considered that there is a small quantity of UEs.

The area in the foregoing example may be a region-level-based (an administrative region such as Pudong New Area of Shanghai) area, or a cell-level area, or a base-station-level area.

S403: A controller obtains the UE track information from the data analysis platform.

Specifically, the controller may obtain the UE track information in the following manners.
1. The controller sends a data analysis request to the data analysis platform. The analysis request includes UE track information analysis request information. If the analysis request does not include information about a specific local area, the data analysis platform sends analyzed UE track information of all areas (for example, UE track information of all areas of Shanghai) to the controller. If the analysis request includes information about a specific area, the data analysis platform sends analyzed UE track information of this area to the controller. The data analysis platform analyzes the obtained information about the UEs according to the request of the controller, performs data mining on the obtained information about the UEs to obtain the UE track information, and sends the UE track information to the controller.
2. The data analysis platform performs data analysis on the obtained information about the UEs to obtain the UE track information, and sends the UE track information to the controller.

The data analysis platform may perform data analysis as follows:

The data analysis platform analyzes obtained service flow information of single UE to obtain a user behavior preference of the single UE; and
the data analysis platform clusters user behavior preferences of all UEs in an area, to obtain the user behavior preferences of the UEs in the area through clustering; or
the data analysis platform analyzes obtained signaling data of single UE to obtain movement information of the single UE; and
the data analysis platform clusters movement information of all UEs in an area, to obtain the UE movement information of the area through clustering; or
the data analysis platform obtains a quantity of all UEs in an area.

S404: The controller determines a service policy according to the UE track information.

The service policy includes at least one policy of a service function to be deployed (for example, a cache service function or a video optimization service function to be deployed), a service deployment area (for example, a cache service function is deployed in a base station, a video optimization service function is deployed in the user-plane network element, or an antivirus service is deployed on a service node), or a service deployment resource (for example, a resource is allocated to a cache service or a video optimization service to be deployed).

The determining, by the controller, a service policy according to the UE track information specifically includes:
1. The controller determines the service policy according to the UE user profile information in the UE track information.

The service policy may be determined as follows:

It is determined, according to video traffic information in the UE user profile information, whether to deploy a video optimization function. If video traffic is low, the video optimization function is not deployed, or if video traffic is high, the video optimization function is deployed.

Alternatively, it is determined, according to a video click-through rate in the UE user profile information, whether to deploy a content cache function. If the video click-through rate is low, the content cache function is not deployed, or if the video click-through rate is high, the content cache function is deployed.

After it is determined to deploy the content cache function, further, a cache content type in the content cache function is determined according to access content in the UE user profile information. For example, whether a video advertisement or a video film is to be cached.

After the cache content type in the content cache function is determined, further, a resource allocated to the content cache function is determined according to the cache content type. For example, if the cache content type is a video advertisement, few resources are allocated, or if the cache content type is a video film, many resources are allocated.

The following shows an embodiment of determining a service policy.

For the area A, a UE user group is mostly office workers and video access is relatively infrequent. Therefore, when determining a service policy, the controller deploys neither the cache function nor the video optimization function in an access network element that corresponds to the area A or a local area network network element (a network element in the local area network is generally a server, which may be used for deployment of a value-added service of an operator) near the access network element.

For the area B, video traffic is high. Therefore, when determining a service policy, the controller deploys the video optimization function in an access network element that corresponds to the area B or a local area network near the access network element. A UE user group is mostly office workers, a click-through rate of a single video is relatively low, and it is relatively inefficient to deploy the cache function. Therefore, when determining the service policy, the controller does not deploy the cache function in the access network element that corresponds to the area B or the local area network network element near the access network element.

For the areas C and D, UE user groups are mostly visitors and accessed video advertisements are short and small. Therefore, when determining a service policy, the controller deploys the cache function in access network elements that correspond to the areas C and D or local area network network elements near the access network elements. Further, video advertisements have small content and relatively few cache resources are required. Therefore, when determining the service policy, the controller deploys relatively few cache function resources (for example, allocates 10-GB memory resources to a cache service), and further deploys cache content according to information about accessed video advertisements in UE user profile information. Traffic of the video advertisements is relatively low and it is relatively inefficient to perform video optimization deployment. Therefore, when determining the service policy, the controller does not deploy the video optimization function in the access network elements that correspond to the areas C and D or the local area network network elements near the access network elements.

For the area E, according to information that indicates that video traffic is high and that is in UE user profile information, when determining a service policy, the controller deploys the video optimization function in an access network element that corresponds to the area E or a local area network network element near the access network element. A UE user group is mostly residents, variety shows are favored, and a rebroadcast rate of the variety shows is high. Therefore, when determining the service policy, the controller deploys the cache function in the access network element that corresponds to the area E or the local area network network element near the access network element. Further, the variety shows have large video content, and relatively many cache resources are required. Therefore, when determining the service policy, the controller also deploys relatively many cache resources (for example, allocates 10-TB memory resources to a cache service). Further, according to information that indicates that a rebroadcast rate of variety-show-type videos is relatively high and that is in the UE user profile information, when determining the service policy, the controller deploys to cache variety-show-type video content.

For the area F, video traffic is high. Therefore, when determining a service policy, the controller deploys the video optimization function in an access network element that corresponds to the area F or a local area network network element near the access network element. A UE user group is mostly residents, a click-through rate of a single video is low, it is relatively inefficient to deploy the cache function, and a click-through rate is low. Therefore, when determining the service policy, the controller does not deploy the cache function in the access network element that corresponds to the area F or the local area network network element near the access network element.
2. The controller determines the service policy according to the UE user profile information and the UE movement information in the UE track information.

The service policy may be determined as follows:

It is determined, according to video traffic information in the UE user profile information, whether to deploy a video optimization function. If video traffic is low, the video optimization function is not deployed, or if video traffic is high, the video optimization function is deployed. Further, a location at which the video optimization function is deployed is determined according to the UE movement information. If a UE moving speed in the UE movement information is fast, the video optimization function is deployed in a user-plane network element that corresponds to the area or a local area network network element near the user-plane network element. If a UE moving speed in the UE movement information is slow, the video optimization function is deployed in an access network element that corresponds to the area or a local area network network element near the access network element.

Alternatively, it is determined, according to a video click-through rate in the UE user profile information, whether to deploy a content cache function. If a video click-through rate is low, the content cache function is not deployed, or if a video click-through rate is high, the content cache function is deployed. Further, a location at which the content cache function is deployed is determined according to the UE movement information. If a UE moving speed in the UE movement information is fast, the content cache function is deployed in a user-plane network element that corresponds to the area or a local area network network element near the user-plane network element. If a UE moving speed in the UE movement information is slow, the content cache function is deployed in an access network element that corresponds to the area or a local area network network element near the access network element.

After it is determined to deploy the content cache function, further, a cache content type in the content cache function is determined according to access content in the UE user profile information. For example, whether a video advertisement or a video film is to be cached.

After the cache content type in the content cache function is determined, further, a resource allocated to the content cache function is determined according to the cache content type. For example, if the cache content type is a video advertisement, few resources are allocated, or if the cache content type is a video film, many resources are allocated.

The following shows an embodiment of determining a service policy.

For the area A, a UE user group is mostly office workers and video access is relatively infrequent. Therefore, when determining a service policy, the controller deploys neither the cache function nor the video optimization function in an access network element that corresponds to the area A or a local area network network element near the access network element.

For the area B, video traffic is high, but a stay duration is short and a moving speed is fast, that is, the UE leaves the area B very soon. Therefore, it is relatively inefficient to deploy the video optimization function in an access network element that corresponds to the area B or a local area network network element near the access network element. It is efficient to deploy the video optimization function in a user-plane network element that corresponds to the area B or a local area network network element (a network element in the local area network may be used for deployment of a value-added service of an operator) near the user-plane network element. Therefore, when determining a service policy, the controller does not deploy the video optimization function in the access network element that corresponds to the area B or the local area network network element near the access network element, and deploys the video optimization function in the user-plane network element that corresponds to the area B or the local area network network element near the user-plane network element. A UE user group is mostly office workers and a click-through rate of a single video is low. Therefore, when determining the service policy, the controller does not deploy the cache function in the access network element that corresponds to the area B or the local area network network element near the access network element.

For the areas C and D, UE user groups are mostly visitors and accessed video advertisements are short and small, but a stay duration is short and a moving speed is fast, that is, the UE leaves the areas C and D very soon. Therefore, it is inefficient to deploy the cache function in access network elements that correspond to the areas C and D or local area network network elements near the access network elements. A click-through rate of the video advertisements is relatively high, it is efficient to deploy the cache function in user-plane network elements that correspond to the areas C and D or local area networks near the user-plane network elements, and a click-through rate is high. Therefore, when determining a service policy, the controller does not deploy the cache function in the access network elements that correspond to the areas C and D or the local area networks near the access network elements, and deploys the cache function in the user-plane network elements that correspond to the areas C and D or the local area networks near the user-plane network elements. Further, video advertisements have small content and relatively few cache resources are required. Therefore, when determining the service policy, the controller deploys relatively few cache function resources (for example, allocates 10-GB memory resources to a cache service). Further, the controller deploys, according to information about accessed video advertisements in area user group information, to cache video advertisement-type content. Traffic of the video advertisements is low, and it is inefficient to deploy the video optimization function. Therefore, when determining the service policy, the controller deploys the video optimization function in none of the access network elements that correspond to the areas C and D, the local area network network elements near the access network elements, the user-plane network elements, or the local area network network elements near the user-plane network elements.

For the area E, video traffic is high, a user stay duration is relatively long, and a moving speed is slow, that is, the UEs reside in the area E for a relatively long time period. Therefore, when determining a service policy, the controller deploys the video optimization function in an access network element that corresponds to the area E or a local area network network element near the access network element. A UE user group is mostly residents, the user group favors variety-show-type programs, a rebroadcast rate is high, a user stay duration is long, and a moving speed is slow. Therefore, when determining the service policy, the controller deploys the cache function in the access network element that corresponds to the area E or the local area network network element near the access network element. Further, the variety shows have large video content, and relatively many cache resources are required. Therefore, when determining the service policy, the controller also deploys relatively many cache resources (for example, allocates 10-TB memory resources to a cache service). When determining the service policy, the controller deploys, according to information that indicates that a rebroadcast rate of variety-show-type video content is high and that is in the UE user profile information, to cache variety-show-type video content.

For the area F, according to the UE user profile information indicating that video traffic is high, and information that indicates that a stay duration is long and a moving speed is slow and that is in the UE track information, when determining a service policy, the controller deploys the video optimization function in an access network element that corresponds to the area F or a local area network network element near the access network element. A UE user group is mostly residents, a click-through rate of a single video is low, it is relatively inefficient to deploy the cache function, and a click-through rate is low. Therefore, when determining the service policy, the controller does not deploy the cache function in the access network element that corresponds to the area F or the local area network network element near the access network element.
3. The controller determines the service policy according to the UE user profile information and the UE quantity information that are in the UE track information.

The service policy may be determined as follows:

It is determined, according to video traffic information in the UE user profile information, whether to deploy a video optimization function. If video traffic is low, the video optimization function is not deployed, or if video traffic is high, the video optimization function is deployed.

Alternatively, it is determined, according to a video click-through rate in the UE user profile information, whether to deploy a content cache function. If a video click-through rate is low, the content cache function is not deployed, or if a video click-through rate is high, the content cache function is deployed. Further, a location at which the content cache function is deployed is determined according to the UE quantity information. If the UE quantity information indicates that there are few people in the area, the content cache function is deployed in a user-plane network element that corresponds to the area or a local area network network element near the user-plane network element. If the UE quantity information indicates that there are many people in the area, the content cache function is deployed in an access network element that corresponds to the area or a local area network network element near the access network element.

After it is determined to deploy the content cache function, further, a cache content type in the content cache function is determined according to access content in the UE user profile information. For example, whether a video advertisement or a video film is to be cached.

After the cache content type in the content cache function is determined, further, a resource allocated to the content cache function is determined according to the cache content type. For example, if the cache content type is a video advertisement, few resources are allocated, or if the cache content type is a video film, many resources are allocated.

The following shows an embodiment of determining a service policy.

For the area A, there are a large quantity of UEs, but a UE user group is mostly office workers and video access is relatively infrequent. Therefore, when determining a service policy, the controller deploys neither the cache function nor the video optimization function in an access network element that corresponds to the area A or a local area network network element near the access network element.

For the area B, there are a large quantity of UEs and video traffic is high. Therefore, when determining a service policy, the controller deploys the video optimization function in an access network element that corresponds to the area B or a local area network network element near the access network element. There are a large quantity of UEs, but a UE user group is mostly office workers, a click-through rate of a single video is low, it is relatively inefficient to deploy the cache function, and a click-through rate is low. Therefore, when determining the service policy, the controller does not deploy the cache function in the access network element that corresponds to the area A or the local area network network element near the access network element.

For the area C, a UE user group is mostly visitors, accessed video advertisements are short and small, and area traffic is high. Therefore, when determining a service policy, the controller deploys the cache function in an access network element that corresponds to the area C or a local area network network element near the access network element. Further, video advertisements have small content and relatively few cache resources are required. Therefore, the controller deploys relatively few resources to a cache service (for example, allocates 10-GB memory resources to the cache service). Further, the controller deploys, according to information about accessed video advertisements in the UE user profile information, to cache video advertisement-type content. Traffic of the video advertisements is low, and it is inefficient to deploy the video optimization function. Therefore, when determining the service policy, the controller deploys the video optimization function in none of the access network element that corresponds to the area C, the local area network network element near the access network element, a user-plane network element, or a local area network network element near the user-plane network element.

For the area D, a UE user group is mostly visitors and accessed video advertisements are short and small. However, there are few UEs, when the controller determines a service policy, it is inefficient to deploy the cache function in an access network element that corresponds to the area D or a local area network network element near the access network element, and a click-through rate is low. Therefore, the controller does not deploy the cache function in the access network element that corresponds to the area D or the local area network network element near the access network element. Traffic of the video advertisements is low, and it is inefficient to deploy the video optimization function. Therefore, when determining the service policy, the controller deploys the video optimization function in none of the access network element that corresponds to the area D, the local area network network element near the access network element, a user-plane network element, or a local area network network element near the user-plane network element.

For the area E, there are a large quantity of UEs and video traffic is high. Therefore, when determining a service policy, the controller deploys the video optimization function in an access network element that corresponds to the area E or a local area network network element near the access network element. A UE user group is mostly residents, variety shows are favored, a rebroadcast rate of the variety shows is high, and there are a large quantity of UEs. Therefore, when determining the service policy, the controller deploys the cache function in the access network element that corresponds to the area E or the local area network network element near the access network element. Further, the variety shows have large video content, and relatively many cache resources are also required. Therefore, when determining the service policy, the controller also deploys relatively many resources to a cache service (for example, allocates 10-TB memory resources to the cache service). Further, when determining the service policy, the controller deploys, according to information that indicates that a rebroadcast rate of variety-show-type video content is high and that is in area user group analysis information, to cache variety-show-type video content.

For the area F, there are a large quantity of UEs and video traffic is high. Therefore, when determining a service policy, the controller deploys the video optimization function in an access network element that corresponds to the area F or a local area network network element near the access network element. A user group are mostly residents, a click-through rate of a single video is low, it is relatively inefficient to deploy the cache function, and a click-through rate is low. Therefore, when determining the service policy, the controller does not deploy the cache function in the access network element that corresponds to the area F or the local area network network element near the access network element.
4. The controller determines the service policy according to UE user group information, the UE quantity information, and the UE movement information that are in the UE track information.

The service policy may be determined as follows:

It is determined, according to video traffic information in the UE user profile information, whether to deploy a video optimization function. If video traffic is low, the video optimization function is not deployed, or if video traffic is high, the video optimization function is deployed. Further, a location at which the video optimization function is deployed is determined according to the UE movement information and the UE quantity information. If a UE moving speed in the UE movement information is fast, but the UE quantity information indicates that there are a large quantity of UEs, the video optimization function is deployed in a user-plane network element that corresponds to the area or a local area network network element near the user-plane network element. Alternatively, if a UE moving speed in the UE movement information is slow, the video optimization function is deployed in an access network element that corresponds to the area or a local area network network element near the access network element.

Alternatively, it is determined, according to a video click-through rate in the UE user profile information, whether to deploy a content cache function. If the video click-through rate is low, the content cache function is not deployed, or if the video click-through rate is high, the content cache function is deployed. Further, a location at which the content cache function is deployed is determined according to the UE movement information and the UE quantity information. If a UE moving speed in the UE movement information is fast, but the UE quantity information indicates that there are a large quantity of UEs, the content cache function is deployed in a user-plane network element that corresponds to the area or a local area network network element near the user-plane network element. Alternatively, if a UE moving speed in the UE movement information is slow, the content cache function is deployed in an access network element that corresponds to the area or a local area network network element near the access network element.

After it is determined to deploy the content cache function, further, a cache content type in the content cache function is determined according to access content in the UE user profile information. For example, whether a video advertisement or a video film is to be cached.

After the cache content type in the content cache function is determined, further, a resource allocated to the content cache function is determined according to the cache content type. For example, if the cache content type is a video advertisement, few resources are allocated, or if the cache content type is a video film, many resources are allocated.

For the area A, there are a large quantity of UEs, but a UE user group is mostly office workers and video access is infrequent. Therefore, when determining a service policy, the controller deploys neither the cache function nor the video optimization function in an access network element that corresponds to the area A or a local area network network element near the access network element.

For the area B, video traffic is high, but a stay duration is short and a moving speed is fast. This means that the UE leaves the area B very soon. Therefore, when the controller determines a service policy, it is relatively inefficient to deploy the video optimization function in an access network element that corresponds to the area B or a local area network network element near the access network element. However, there are a large quantity of UEs. Therefore, it is efficient to deploy the video optimization function in a user-plane network element that corresponds to the area B or a local area network network element near the user-plane network element. Therefore, when determining a service policy, the controller does not deploy the video optimization function in the access network element that corresponds to the area B or the local area network network element near the access network element, and deploys the video optimization function in the user-plane network element that corresponds to the area B or the local area network network element near the user-plane network element. There are a large quantity of UEs, but a UE user group is mostly office workers, a click-through rate of a single video is low, the stay duration is short, and a moving speed is fast. This means that the UE leaves the area B very soon, and consequently it is inefficient to deploy the cache function and a click-through rate is low. Therefore, the cache function is not deployed in the access network element that corresponds to the area A or the local area network network element near the access network element.

For the area C, UE user groups are mostly visitors and accessed video advertisements are short and small, but a stay duration is short and a moving speed is fast. This means that the UE leaves the area C very soon. Therefore, it is inefficient to deploy the cache function in access network element that corresponds to the area C or a local area network network element near the access network element, and a click-through rate is low. However, there are a large quantity of UEs. Therefore, it is efficient to deploy the cache function in a user-plane network element that corresponds to the area C or a local area network near the user-plane network element, and a click-through rate is high. Therefore, when determining a service policy, the controller does not deploy the cache function in the access network element that corresponds to the area C or the local area network near the access network element, and deploys the cache function in the user-plane network element that corresponds to the area C or the local area network near the user-plane network element. Further, video advertisements have small content and relatively few cache resources are required. Therefore, the controller deploys relatively few resources for a cache service (for example, allocates 10-GB memory resources to the cache service). Further, the controller deploys, according to information about accessed video advertisements in UE user group analysis information, to cache video advertisement-type content. Traffic of the video advertisements is low, and it is inefficient to deploy the video optimization function. Therefore, the controller deploys the video optimization function in none of the access network element that corresponds to the area C, the local area network network element near the access network element, the user-plane network element, or the local area network network element near the user-plane network element.

For the area D, a UE user group is mostly visitors and accessed video advertisements are short and small. However, a stay duration is short and a moving speed is fast. This means that the UE leaves the area D very soon. Therefore, it is inefficient to deploy the cache function in an access network element that corresponds to the area D or a local area network network element near the access network element. A click-through rate is low, and there are few UEs, that is, it is inefficient to deploy the cache function in a user-plane network element that corresponds to the area D or a local area network network element near the user-plane network element. Therefore, when determining a service policy, the controller deploys the video optimization function in none of the access network element that corresponds to the area D, the local area network network element near the access network element, the user-plane network element, or the local area network network element near the user-plane network element. Traffic of the video advertisements is low, and it is inefficient to deploy the video optimization function. Therefore, when determining the service policy, the controller deploys the video optimization function in none of the access network element that corresponds to the area D, the local area network network element near the access network element, the user-plane network element, or the local area network network element near the user-plane network element.

For the area E, video traffic is high, a user stay duration is relatively long, and a moving speed is slow, that is, the UEs reside in the area E for a long time period. Therefore, when determining a service policy, the controller deploys the video optimization function in an access network element that corresponds to the area E or a local area network network element near the access network element. A UE user group is mostly residents, variety-show-type programs are favored, a rebroadcast rate is high, a user stay duration is long, and a moving speed is slow. This means that the UEs reside in the area E for a long time period, and a video rebroadcast rate is high. Therefore, the cache function is deployed in the access network element that corresponds to the area E or the local area network network element near the access network element. Further, because the variety shows have large video content, relatively many cache resources are also required. When deploying the service policy, the controller also deploys relatively many cache service resources (for example, allocates 10-TB memory resources to a cache service). Further, the controller deploys to cache variety-show-type video content according to variety-show-type video content in area user group analysis information.

For the area F, video traffic is high, a user stay duration is long, and a moving speed is slow, that is, the UEs reside in the area F for a long time period. In addition, there are a large quantity of UEs. Therefore, when determining a service policy, the controller deploys the video optimization function in an access network element that corresponds to the area F or a local area network network element near the access network element. A user group is mostly residents, a click-through rate of a single video is low, it is relatively inefficient to deploy the cache function, and a click-through rate is low. Therefore, when determining the service policy, the controller does not deploy the cache function in the access network element that corresponds to the area F or the local area network network element near the access network element.

S405: The controller deploys the service policy according to the determined service policy.

Specifically, the controller sends the service policy to the access network element, the user-plane network element, a local area network network element near the access network element, or a local area network network element near the user-plane network element. The access network element, the user-plane network element, or the local area network network element near the access network element, or the local area network network element near the user-plane network element determines a service function to be deployed, a service deployment area, a service deployment resource, or the like according to the obtained service deployment policy. The local area network network element near the user-plane network element and the local area network network element near the access network element may be service nodes. The access network element, the user-plane network element, a local area network node near the access network element, or a local area network node near the user-plane network element virtualizes, based on the determined service function to be deployed, the determined service deployment area, the determined service deployment resource, or the like, a hardware resource in a data center that corresponds to the service deployment area into a virtual machine by using a virtualization technology. The access network element, the user-plane network element, the local area network node near the access network element, or the local area network node near the user-plane network element loads, to this virtual machine, a determined service function software application to be deployed, runs the software application, and implements the service function deployment. For example, if the service deployment policy received by the access network element includes deployment of the video optimization function and the content cache function, a storage resource allocated to the content cache function is 10 TB, and the cache content type in the content cache function is a video film, the access network element virtualizes a virtual machine by using the virtualization technology, and a storage resource of this virtual machine is 10 TB. The access network element loads a video optimization function software application and a content cache function software application to the virtualized virtual machine, runs the software applications, and implements deployment of the video optimization function and the content cache function. The access network element sets a cache content type of the content cache function software application in the virtual machine to the video film. Subsequently, after receiving video film content, the access network element sends the video film content to the content cache function software application in the virtual machine, and the content cache function software application caches the video film content to a storage resource used by the content cache function software application.

Alternatively, the controller determines a service function to be deployed, applies for a resource needed for the service function that needs to be deployed, determines a service deployment network element, and allocates the resource that is applied for to the service function deployment network element. The controller virtualizes, based on the determined service function to be deployed, a determined service deployment area, the determined service deployment resource, or the like, a hardware resource in a data center that corresponds to the service deployment area into a virtual machine by using a virtualization technology. The controller loads, to this virtual machine, a determined service function software application to be deployed, runs the software application, and implements service function deployment. The controller allocates the virtualized virtual machine to the service function deployment network element. For example, if the controller determines to deploy the video optimization function and the content cache function in the access network element, a storage resource allocated to the content cache function is 10 TB, and a cache content type in the content cache function is a video film, the access network element virtualizes a hardware resource in a data center at which the access network element is located into a virtual machine, and a storage resource of this virtual machine is 10 TB. The controller loads a video optimization function software application and a content cache function software application to the virtualized virtual machine, notifies the virtual machine to run the video optimization function software application and the content cache function software, and completes deployment of the video optimization function and the content cache function. The controller allocates the virtualized virtual machine to the access network element. The controller sets a cache content type of the content cache function software application in the virtual machine to the video film. Subsequently, after receiving video film content, the access network element sends the video film content to the content cache function software application in the virtual machine, and the content cache function software application caches the video film content to a storage resource used by the content cache function software application.

Therefore, according to the service deployment method in this embodiment of the present invention, a controller determines a policy according to user equipment UE track information sent by a data analysis platform, and deploys a service policy, so as to ensure that a service function is deployed in a mobile network as needed, thereby avoiding network resource waste possibly caused by a static service configuration.

FIG. 5 is a schematic block diagram of a service policy deployment apparatus according to an embodiment of the present invention. The apparatus may be a controller, and this is not limited in the present invention. The apparatus may be configured to perform the methods provided in the embodiments of the present invention that are shown in FIG. 2 and FIG. 4.

As shown in FIG. 5, the apparatus includes:
a receiving module 501, configured to receive user equipment UE track information of a first area that is sent by a data analysis platform; and
a processing module 502, configured to: determine a service policy of the first area according to the UE track information, and deploy the service policy for the first area according to the service policy.

Further, the apparatus further includes: a sending module 503, configured to send a data analysis request to the data analysis platform to request to obtain the UE track information. The receiving module 501 is specifically configured to receive the UE track information sent by the data distribution platform, where the UE track information is obtained by the data distribution platform by analyzing information about UEs in the first area.

Alternatively, the receiving module 501 is configured to receive the UE track information that is sent by the data distribution platform and that is obtained according to information about UEs in the first area.

Specifically, the UE track information includes: UE user profile information. The UE track information further includes at least one piece of information of: UE movement information or UE quantity information.

The processing module 502 being configured to determine a service policy of the first area according to the UE track information includes: the processing module 502 being configured to determine the service policy of the first area according to the UE user profile information and the UE movement information; or the processing module 502 being configured to determine the service policy of the first area according to the UE user profile information and the UE quantity information; or the processing module 502 being configured to determine the service policy of the first area according to the UE user profile information, the UE quantity information, and the UE movement information of the area.

Specifically, the service policy includes at least one policy of service function deployment, a service deployment area, or a service deployment resource.

The processing module 502 being configured to determine the service policy of the first area according to the UE user profile information includes: the processing module being configured to determine, according to video traffic information in the UE user profile information, whether to deploy a video optimization function. The processing module 502 is further configured to determine, according to the UE movement information, a location at which the video optimization function is deployed, or is further configured to determine, according to the UE movement information and the UE quantity information, a location at which the video optimization function is deployed.

The processing module 502 being configured to determine the service policy of the first area according to the UE user profile information includes: the processing module 502 being configured to determine, according to a video click-through rate in the UE user profile information, whether to deploy a content cache function.

Specifically, the processing module 502 is configured to determine, according to the UE movement information, a location at which the content cache function is deployed; or the processing module 502 is configured to determine, according to the UE quantity information, a location at which the content cache function is deployed; or the processing module 502 is configured to determine, according to the UE movement information and the UE quantity information, a location at which the content cache function is deployed.

Specifically, the processing module 502 is configured to determine a cache content type in the content cache function according to access content in the UE user profile information. The processing module 502 is further configured to determine, according to the cache content type, a resource allocated to the content cache function.

The processing module 502 being configured to deploy the service policy for the first area according to the service policy includes: the processing module 502 being configured to send the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or the processing module 502 being configured to: according to the service policy, determine a service function to be deployed, apply for a service deployment resource, determine a service deployment network element, and allocate the resource that is applied for to the service function deployment network element.

Therefore, according to the service deployment apparatus in this embodiment of the present invention, a policy is determined according to user equipment UE track information sent by a data analysis platform, and a service policy is deployed, so as to ensure that a service function is deployed in a mobile network as needed, thereby avoiding network resource waste possibly caused by a static service configuration.

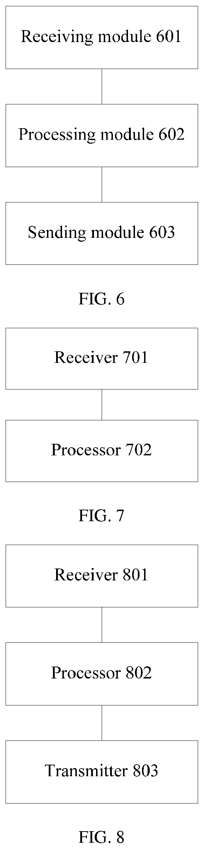

FIG. 6 is a schematic block diagram of a service deployment apparatus according to an embodiment of the present invention. The apparatus may be a data analysis platform, and this is not limited in the present invention. The apparatus may perform the methods provided in the embodiments of the present invention that are shown in FIG. 3 and FIG. 4.

As shown in FIG. 6, the apparatus includes:
a receiving module 601, configured to obtain information about UEs in a first area;
a processing module 602, configured to analyze the information about the UEs to obtain UE track information of the first area; and
a sending module 603, configured to send the UE track information to a controller, so that the controller determines a service policy of the first area according to the UE track information and deploys the service policy.

Specifically, the UE track information includes: UE user profile information. the UE track information further includes at least one piece of information of: UE movement information or UE traffic information. The information about the UEs includes: location information of the UEs, signaling data of the UEs, or service flow information of the UEs.

The receiving module 601 being configured to obtain information about UEs in a first area includes: the receiving module 601 being configured to obtain the location information of the UEs that is sent by an access network element or an operation support system OSS; or the receiving module being configured to obtain the signaling data of the UEs that is sent by a control-plane network element; or the receiving module is configured to obtain the service flow information of the UEs that is sent by a user-plane network element.

The processing module 602 being configured to analyze the information about the UE includes at least one of the following processing manners: the processing module 602 being configured to: analyze obtained service flow information of individual UE to obtain a user behavior preference of the individual UE, and cluster user behavior preferences of all UEs in the first area, to obtain the user behavior preferences of the UEs in the first area through clustering and obtain the UE user profile information; or the processing module 602 being configured to: analyze obtained signaling data of individual UE to obtain movement information of the individual UE, and cluster movement information of all UEs in the first area, to obtain the UE movement information of the first area through clustering; or the processing module 602 being configured to: obtain a quantity of all UEs in the first area.

According to the service deployment apparatus provided in this embodiment of the present invention, the data analysis platform analyzes information about UEs to obtain UE track information of an area, and sends the UE track information of the area, so that the controller determines a service policy according to the UE track information of the area, and deploys the service policy, so as to ensure that a service function is deployed in a mobile network as needed, thereby avoiding network resource waste possibly caused by a static service configuration.

FIG. 7 is a schematic block diagram of a service policy deployment apparatus according to an embodiment of the present invention. The apparatus may be a controller, and this is not limited in the present invention. The apparatus may be configured to perform the methods provided in the embodiments of the present invention that are shown in FIG. 2 and FIG. 4.

As shown in FIG. 7, the apparatus includes:
a receiver 701, configured to receive user equipment UE track information of a first area that is sent by a data analysis platform; and
a processor 702, configured to: determine a service policy of the first area according to the UE track information, and deploy the service policy for the first area according to the service policy.

Further, the apparatus further includes: a transmitter 703, configured to send a data analysis request to the data analysis platform to request to obtain the UE track information. The receiver 701 is specifically configured to receive the UE track information sent by the data distribution platform, where the UE track information is obtained by the data distribution platform by analyzing information about UEs in the first area.

Alternatively, the receiver 701 is configured to receive the UE track information that is sent by the data distribution platform and that is obtained according to information about UEs in the first area.

Specifically, the UE track information includes: UE user profile information. The UE track information further includes at least one piece of information of: UE movement information or UE quantity information.

The processor 702 being configured to determine a service policy of the first area according to the UE track information includes: the processor 702 being configured to determine the service policy of the first area according to the UE user profile information and the UE movement information; or the processor 702 being configured to determine the service policy of the first area according to the UE user profile information and the UE quantity information; or the processor 702 being configured to determine the service policy of the first area according to the UE user profile information, the UE quantity information, and the UE movement information of the area.

Specifically, the service policy includes at least one policy of service function deployment, a service deployment area, or a service deployment resource.

The processor 702 being configured to determine the service policy of the first area according to the UE user profile information includes: the processing module being configured to determine, according to video traffic information in the UE user profile information, whether to deploy a video optimization function. The processor 702 is further configured to determine, according to the UE movement information, a location at which the video optimization function is deployed, or is further configured to determine, according to the UE movement information and the UE quantity information, a location at which the video optimization function is deployed.

The processor 702 being configured to determine the service policy of the first area according to the UE user profile information includes: the processor 702 being configured to determine, according to a video click-through rate in the UE user profile information, whether to deploy a content cache function.

Specifically, the processor 702 is configured to determine, according to the UE movement information, a location at which the content cache function is deployed; or the processor 702 is configured to determine, according to the UE quantity information, a location at which the content cache function is deployed; or the processor 702 is configured to determine, according to the UE movement information and the UE quantity information, a location at which the content cache function is deployed.

Specifically, the processor 702 is configured to determine a cache content type in the content cache function according to access content in the UE user profile information. The processor 702 is further configured to determine, according to the cache content type, a resource allocated to the content cache function.

The processor 702 being configured to deploy the service policy for the first area according to the service policy includes: the processor 702 being configured to send the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or the processor 702 being configured to: according to the service policy, determine a service function to be deployed, apply for a service deployment resource, determine a service deployment network element, and allocate the resource that is applied for to the service function deployment network element.

Therefore, according to the service deployment apparatus in this embodiment of the present invention, a policy is determined according to user equipment UE track information sent by a data analysis platform, and a service policy is deployed, so as to ensure that a service function is deployed in a mobile network as needed, thereby avoiding network resource waste possibly caused by a static service configuration.

It should be understood that in this embodiment of the present invention, the processor 702 may be a central processing unit (Central Processing Unit, "CPU" for short), or the processor 702 may be another general-purpose processor, a digital signal processor (DSP), an application-specific integrated circuit (ASIC), a field-programmable gate array (FPGA) or another programmable logic device, discrete gate or transistor logical device, and discrete hardware component. The general-purpose processor may be a microprocessor or the processor may be any conventional processor or the like.

In an implementation process, the foregoing steps may be completed by using an integrated logic circuit of hardware in the processor 702 or an instruction in a form of software. Steps of the methods disclosed with reference to the embodiments of the present invention may be directly performed and completed by means of a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor 702 reads information in the memory and completes the steps in the foregoing methods in combination with hardware of the processor 702. To avoid repetition, details are not described herein again.

FIG. 8 is a schematic block diagram of a service deployment apparatus according to an embodiment of the present invention. The apparatus may be a data analysis platform, and this is not limited in the present invention. The apparatus may perform the methods provided in the embodiments of the present invention that are shown in FIG. 3 and FIG. 4.

As shown in FIG. 8, the apparatus includes:
a receiver 801, configured to obtain information about UEs in a first area;
a processor 802, configured to analyze the information about the UEs to obtain UE track information of the first area; and
a transmitter 803, configured to send the UE track information to a controller, so that the controller determines a service policy of the first area according to the UE track information and deploys the service policy.

Specifically, the UE track information includes: UE user profile information. The UE track information further includes at least one piece of information of: UE movement information or UE traffic information. The information about the UEs includes: location information of the UEs, signaling data of the UEs, or service flow information of the UEs.

The receiver 801 being configured to obtain information about UEs in a first area includes: the receiving module 601 being configured to obtain the location information of the UEs that is sent by an access network element or an operation support system OSS; or the receiving module being configured to obtain the signaling data of the UEs that is sent by a control-plane network element; or the receiving module is configured to obtain the service flow information of the UEs that is sent by a user-plane network element.

The processor 802 being configured to analyze the information about the UEs includes at least one of the following processing manners: the processor 802 being configured to: analyze obtained service flow information of single UE to obtain a user behavior preference of the single UE, and cluster user behavior preferences of all UEs in the first area, to obtain the user behavior preferences of the UEs in the first area through clustering and obtain the UE user profile information; or the processor 802 being configured to: analyze obtained signaling data of single UE to obtain movement information of the single UE, and cluster movement information of all UEs in the first area, to obtain the UE movement information of the first area through clustering; or the processor 802 being configured to: obtain a quantity of all UEs in the first area.

According to the service deployment apparatus provided in this embodiment of the present invention, the data analysis platform analyzes information about UEs to obtain UE track information of an area, and sends the UE track information of the area, so that the controller determines a service policy according to the UE track information of the area, and deploys the service policy, so as to ensure that a service function is deployed in a mobile network as needed, thereby avoiding network resource waste possibly caused by a static service configuration.

It should be understood that in this embodiment of the present invention, the processor 802 may be a central processing unit (Central Processing Unit, "CPU" for short), and the processor 802 may be further another general-purpose processor, a digital signal processor (DSP), an application-specific integrated circuit (ASIC), a field-programmable gate array (FPGA) or another programmable logical device, a discrete gate or transistor logical device, a discrete hardware component, or the like. The general-purpose processor may be a microprocessor or the processor may be any conventional processor or the like.

In an implementation process, the foregoing steps may be completed by using an integrated logic circuit of hardware in the processor 802 or an instruction in a form of software. Steps of the methods disclosed with reference to the embodiments of the present invention may be directly performed and completed by means of a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory, and the processor 802 reads information in the memory and completes the steps in the foregoing methods in combination with hardware of the processor 802. To avoid repetition, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service policy deployment method, comprising:
receiving, by a controller, user equipment UE track information of a first area that is sent by a data analysis platform;
determining, by the controller, a service policy of the first area according to the UE track information; and
deploying, by the controller, the service policy for the first area according to the service policy.

2. The method according to claim 1, comprising:
sending, by the controller, a data analysis request to the data analysis platform to request to obtain the UE track information of the first area; and
receiving, by the controller, the UE track information sent by the data distribution platform, wherein the UE track information is obtained by the data distribution platform by analyzing information about UEs in the first area; or
obtaining, by the controller, the UE track information that is sent by the data distribution platform and that is obtained according to information about UEs in the first area.

3. The method according to claim 1 or 2, wherein the UE track information comprises: UE user profile information.

4. The method according to claim 3, wherein the UE track information further comprises at least one piece of information of: UE movement information or UE quantity information.

5. The method according to claim 3 or 4, wherein the determining, by the controller, a service policy of the first area according to the UE track information comprises:
determining, by the controller, the service policy of the first area according to the UE user profile information.

6. The method according to claim 4, wherein the determining, by the controller, a service policy of the first area according to the UE track information comprises:
determining, by the controller, the service policy of the first area according to the UE user profile information and the UE movement information; or
determining, by the controller, the service policy of the first area according to the UE user profile information and the UE quantity information; or
determining, by the controller, the service policy of the first area according to the UE user profile information, the UE quantity information, and the UE movement information of the area.

7. The method according to any one of claims 1 to 6, wherein the service policy comprises at least one policy of service function deployment, a service deployment area, or a service deployment resource.

8. The method according to claim 5 or 7, wherein the determining, by the controller, the service policy of the first area according to the UE user profile information comprises:
determining, by the controller according to video traffic information in the UE user profile information, whether to deploy a video optimization function.

9. The method according to claim 8, wherein the method further comprises:
determining, by the controller according to the UE movement information, a location at which the video optimization function is deployed; or
determining, by the controller according to the UE movement information and the UE quantity information, a location at which the video optimization function is deployed.

10. The method according to claim 7, wherein the determining, by the controller, the service policy of the first area according to the UE user profile information comprises:
determining, by the controller according to a video click-through rate in the UE user profile information, whether to deploy a content cache function.

11. The method according to claim 10, wherein the method further comprises:
determining, by the controller according to the UE movement information, a location at which the content cache function is deployed; or
determining, by the controller according to the UE quantity information, a location at which the content cache function is deployed; or
determining, by the controller according to the UE movement information and the UE quantity information, a location at which the content cache function is deployed.

12. The method according to claim 10, wherein the method further comprises:
determining, by the controller, a cache content type in the content cache function according to access content in the UE user profile information.

13. The method according to claim 12, wherein the method further comprises:
determining, by the controller according to the cache content type, a resource allocated to the content cache function.

14. The method according to any one of claims 7 to 13, wherein the deploying, by the controller, the service policy for the first area according to the service policy comprises:
sending, by the controller, the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or
according to the service policy, determining, by the controller, a service function to be deployed, applying for a service deployment resource, determining a service deployment network element, and allocating the resource that is applied for to the service function deployment network element.

15. A service policy deployment method, comprising:
obtaining, by a data analysis platform, information about UEs in a first area;
analyzing, by the data analysis platform, the information about the UEs to obtain UE track information of the first area; and
sending, by the data analysis platform, the UE track information to a controller, so that the controller determines a service policy of the first area according to the UE track information and deploys the service policy.

16. The method according to claim 15, wherein the UE track information comprises: UE user profile information.

17. The method according to claim 16, wherein the UE track information further comprises at least one piece of information of: UE movement information or UE traffic information.

18. The method according to any one of claims 15 to 17, wherein the information about the UEs comprises: location information of the UEs, signaling data of the UEs, or service flow information of the UEs.

19. The method according to claim 18, wherein the obtaining, by a data analysis platform, information about UEs comprises:
obtaining, by the data analysis platform, the location information of the UEs that is sent by an access network element or an operation support system OSS; or
obtaining, by the data analysis platform, the signaling data of the UEs that is sent by a control-plane network element; or
obtaining, by the data analysis platform, the service flow information of the UEs that is sent by a user-plane network element.

20. The method according to any one of claims 15 to 20, wherein the analyzing, by the data analysis platform, the information about the UEs comprises at least one of the following manners:
analyzing, by the data analysis platform, obtained service flow information of single UE to obtain a user behavior preference of the single UE; and clustering, by the data analysis platform, user behavior preferences of all UEs in the first area, to obtain the user behavior preferences of the UEs in the first area through clustering and obtain the UE user profile information; or
analyzing, by the data analysis platform, obtained signaling data of single UE to obtain movement information of the single UE; and clustering, by the data analysis platform, movement information of all UEs in the first area, to obtain the UE movement information of the first area through clustering; or
obtaining, by the data analysis platform, a quantity of all UEs in the first area.

21. A service policy deployment apparatus, comprising:
a receiving module, configured to receive user equipment UE track information of a first area that is sent by a data analysis platform; and
a processing module, configured to: determine a service policy of the first area according to the UE track information, and deploy the service policy for the first area according to the service policy.

22. The method according to claim 21, wherein the apparatus further comprises:
a sending module, configured to send a data analysis request to the data analysis platform to request to obtain the UE track information; and
the receiving module being configured to receive user equipment UE track information of a first area that is sent by the data analysis platform comprises:
the receiving module being configured to receive the UE track information sent by the data distribution platform, wherein the UE track information is obtained by the data distribution platform by analyzing information about UEs in the first area; or
the receiving module being configured to receive user equipment UE track information of a first area that is sent by a data analysis platform comprises:
the receiving module being configured to receive the UE track information that is sent by the data distribution platform and that is obtained according to information about UEs in the first area.

23. The apparatus according to claim 21 or 22, wherein the UE track information comprises: UE user profile information.

24. The apparatus according to claim 23, wherein the UE track information further comprises at least one piece of information of: UE movement information or UE quantity information.

25. The apparatus according to claim 23 or 24, wherein the processing module being configured to determine a service policy of the first area according to the UE track information comprises:
the processing module being configured to determine the service policy of the first area according to the UE user profile information.

26. The apparatus according to claim 24, wherein the processing module being configured to determine a service policy of the first area according to the UE track information comprises:
the processing module being configured to determine the service policy of the first area according to the UE user profile information and the UE movement information; or
the processing module being configured to determine the service policy of the first area according to the UE user profile information and the UE quantity information; or
the processing module being configured to determine the service policy of the first area according to the UE user profile information, the UE quantity information, and the UE movement information of the area.

27. The apparatus according to any one of claims 21 to 26, wherein the service policy comprises at least one policy of service function deployment, a service deployment area, or a service deployment resource.

28. The apparatus according to claim 25 or 27, wherein the processing module being configured to determine the service policy of the first area according to the UE user profile information comprises:
the processing module being configured to determine, according to video traffic information in the UE user profile information, whether to deploy a video optimization function.

29. The apparatus according to claim 28, wherein the processing module is further configured to determine, according to the UE movement information, a location at which the video optimization function is deployed; or
the processing module is further configured to determine, according to the UE movement information and the UE quantity information, a location at which the video optimization function is deployed.

30. The apparatus according to claim 27, wherein the processing module being configured to determine the service policy of the first area according to the UE user profile information comprises:
the processing module being configured to determine, according to a video click-through rate in the UE user profile information, whether to deploy a content cache function.

31. The apparatus according to claim 30, wherein the apparatus comprises:
the processing module, configured to determine, according to the UE movement information, a location at which the content cache function is deployed; or
the processing module, configured to determine, according to the UE quantity information, a location at which the content cache function is deployed; or
the processing module, configured to determine, according to the UE movement information and the UE quantity information, a location at which the content cache function is deployed.

32. The apparatus according to claim 30, wherein the apparatus comprises:
the processing module, configured to determine a cache content type in the content cache function according to access content in the UE user profile information.

33. The apparatus according to claim 32, wherein the apparatus further comprises:
the processing module, configured to determine, according to the cache content type, a resource allocated to the content cache function.

34. The apparatus according to any one of claims 27 to 33, wherein the processing module being configured to deploy the service policy for the first area according to the service policy comprises:
the processing module being configured to send the service policy to at least one of an access network element, a user-plane network element, a local area network network element near the access network element, or a local area network network element near the user-plane network element, so that the access network element, the user-plane network element, the local area network network element near the access network element, or the local area network network element near the user-plane network element deploys at least one service policy of the service function deployment, the service deployment area, or the service deployment resource; or
the processing module being configured to: according to the service policy, determine a service function to be deployed, apply for a service deployment resource, determine a service deployment network element, and allocate the resource that is applied for to the service function deployment network element.

35. A service policy deployment apparatus, comprising:
a receiving module, configured to obtain information about UEs in a first area;
a processing module, configured to analyze the information about the UEs to obtain UE track information of the first area; and
a sending module, configured to send the UE track information to a controller, so that the controller determines a service policy of the first area according to the UE track information and deploys the service policy.

36. The apparatus according to claim 35, wherein the UE track information comprises: UE user profile information.

37. The apparatus according to claim 36, wherein the UE track information further comprises at least one piece of information of: UE movement information or UE traffic information.

38. The apparatus according to any one of claims 35 to 37, wherein the information about the UEs comprises: location information of the UEs, signaling data of the UEs, or service flow information of the UEs.

39. The apparatus according to claim 38, wherein the receiving module is configured to obtain the information about the UEs in the first area; and
the receiving module is configured to obtain the location information of the UEs that is sent by an access network element or an operation support system OSS; or
the receiving module is configured to obtain the signaling data of the UEs that is sent by a control-plane network element; or
the receiving module is configured to obtain the service flow information of the UEs that is sent by a user-plane network element.

40. The apparatus according to any one of claims 35 to 39, wherein the processing module being configured to analyze the information about the UEs comprises at least one of the following processing manners:
the processing module being configured to: analyze obtained service flow information of single UE to obtain a user behavior preference of the single UE, and cluster user behavior preferences of all UEs in the first area, to obtain the user behavior preferences of the UEs in the first area through clustering and obtain the UE user profile information; or
the processing module being configured to: analyze obtained signaling data of single UE to obtain movement information of the single UE, and cluster movement information of all UEs in the first area, to obtain the UE movement information of the first area through clustering; or
the processing module being configured to: obtain a quantity of all UEs in the first area.
